# FASCICULE DE BREVET EUROPEEN

(11) **EP 1 055 558 B1**
(45) Date de publication et mention de la délivrance du brevet: **10.09.2003**
(21) Numéro de dépôt: 00401416.3
(22) Date de dépôt: 23.05.2000
(51) Int. Cl.: B60R 5/04, B60P 1/00

(54) **Plateau porte-charge**
Ladeplattform
Loading bed

(30) Priorité: 26.05.1999 FR 9906622
(43) Date de publication de la demande: 29.11.2000
(73) Titulaire: Armtop, 44117 St. André des Eaux (FR)
(72) Inventeur: Hubschen, Alfred, 44410 Herbignac (FR)
(74) Mandataire: Dawidowicz, Armand

(56) Documents cités:
- EP-A- 0 439 812
- DE-A- 4 337 549
- US-A- 2 565 820
- US-A- 3 972 427
- US-A- 4 993 088
- US-A- 5 634 408
- US-A- 5 692 794

## Description

La présente invention concerne un plateau porte-charge embarquable avec sa charge sur une surface de réception en élévation d'un véhicule de transport, tel qu'un véhicule utilitaire.

Elle concerne plus particulièrement un plateau porte-charge équipé d'organes de roulement ou de glissement servant au déplacement du plateau sur la surface de réception en élévation entre une position dite de transport dans laquelle le plateau repose entièrement sur ladite surface de réception du véhicule et une position dite de chargement ou de déchargement des charges du plateau dans laquelle le plateau est au moins partiellement sorti du véhicule tout en étant maintenu solidaire de ce dernier.

Il existe deux catégories de dispositifs porte-charge embarquables avec leur charge sur une surface de réception en élévation d'un véhicule.

Une première catégorie de dispositifs est constituée par des chariots comprenant un plateau équipé de jeux de pieds avant et arrière déployables pour permettre une extraction complète du chariot du véhicule et son déplacement au sol. L'avantage de tels dispositifs réside dans la facilité d'accès à la totalité de la surface de déchargement ou de chargement des charges du plateau par l'opérateur. L'inconvénient de tels dispositifs réside à l'inverse dans une manipulation fastidieuse pour permettre le déploiement des pieds avant et arrière du dispositif en vue de son extraction complète du véhicule. Le plateau porte-charge, objet de invention, n'appartient pas à cette première catégorie de dispositifs.

Dans cette première catégorie de dispositifs selon le préambule de la revendication 1, certains dispositifs tels que celui décrit dans le brevet EP-0.439.812 comportent des organes de roulement disposés en saillie au-delà du bord frontal avant du plateau porte-charge. Ces organes de roulement sont solidaires de bras télescopiques guidés à l'intérieur de cadres tubulaires montés à rotation sur le plateau porte-charge et immobilisés audit plateau par l'intermédiaire d'un élément de blocage. Cadre et bras constituent, lorsque l'élément de blocage est libéré, un levier qui est utilisé pour compenser une différence de niveau entre le plateau porte-charge du dispositif et la plate-forme du véhicule ou du compartiment à marchandises. En aucun cas, cet élément de blocage ne limite le déplacement du plateau porte-charge à l'intérieur du véhicule.

La seconde catégorie de dispositifs porte-charge est constituée par des plateaux coulissants sur la surface de réception du véhicule, généralement par l'intermédiaire de glissières liant le plateau au véhicule. Un tel plateau est alors disposé, en position sortie du véhicule correspondant à une position de recul maximal, en porte-à-faux par rapport à la surface de réception du véhicule. Cette disposition en porte-à-faux du plateau oblige à limiter le poids de la charge portée par un tel plateau. En outre, la conception même du plateau limite la sortie du plateau du véhicule de sorte que le chargement et le déchargement de la totalité de la surface du plateau sont rendus difficiles pour l'opérateur. Par contre, un tel plateau présente l'avantage d'être aisément rentré ou sorti du véhicule.

Un but de la présente invention est de proposer un plateau porte-charge du type maintenu en liaison avec la surface de réception du véhicule au cours de son fonctionnement dont la conception permet de supporter de lourdes charges tout en accédant aisément à la totalité de la surface de chargement ou de déchargement du plateau.

Un autre but de la présente invention est de proposer un plateau porte-charge aisément manipulable et très stable, y compris en position sortie du plateau du véhicule, la conception de ce plateau permettant de ne pas solliciter à la traction la surface de réception du véhicule.

Un autre but de la présente invention est de proposer un plateau porte-charge dont la conception, en particulier du jeu de pieds, permet sans difficulté de compenser une différence de niveau entre le plateau porte-charge et la surface de réception du véhicule, cette différence de niveau pouvant survenir notamment lors de l'extraction du plateau porte-charge du véhicule.

A cet effet, l'invention a pour objet un plateau porte-charge embarquable avec sa charge sur une surface de réception en élévation d'un véhicule de transport, tel qu'un véhicule utilitaire, ce plateau porte-charge étant équipé d'organes de roulement ou de glissement servant au déplacement du plateau sur la surface de réception en élévation entre une position dite de transport dans laquelle le plateau repose entièrement sur ladite surface de réception du véhicule et une position dite de chargement ou de déchargement des charges du plateau dans laquelle le plateau est au moins partiellement sorti du véhicule, le plateau étant équipé d'un jeu, de préférence unique, de pieds porte-roue arrière, réglables en hauteur, et reliés au plateau pour occuper une position effacée et une position d'appui au sol verrouillée, comporte au moins une partie de ses organes de roulement ou de glissement disposés en saillie au-delà du bord frontal avant du plateau porte-charge, caractérisé en ce que le plateau comporte au moins un organe de limitation du déplacement du chariot disposé entre les organes de roulement ou de glissement saillants et le bord frontal avant du plateau, cet organe de limitation du déplacement coopérant avec un organe correspondant disposé sur la surface de réception du véhicule pour empêcher le recul des organes de roulement ou de glissement avant au-delà d'une position prédéterminée d'appui sur la surface de réception du véhicule.

La présence de pieds arrière réglables d'appui au sol du plateau et le positionnement particulier des organes de roulement avant par rapport au plateau permettent d'obtenir un plateau parfaitement stable en position de transport ou en position de chargement ou de déchargement des charges sans nuire à l'encombrement du plateau en position de transport, tout en autorisant un accès aisé à la totalité de la surface dudit plateau en position de chargement ou de déchargement des charges, des organes de limitation de déplacement du plateau permettant d'effectuer l'ensemble des opérations de chargement et de déchargement en toute sécurité.

Selon une forme de réalisation préférée de l'invention, les organes de roulement ou de glissement avant sont reliés au plateau par une liaison permettant un déplacement relatif entre plateau et organes de roulement avant, y compris en position de recul maximal des organes de roulement avant.

L'invention a encore pour objet un véhicule de transport de charge du type comportant une surface de réception de charge en élévation, caractérisé en ce que la surface de réception de charge en élévation est agencée pour embarquer un plateau porte-charge du type précité.

L'invention sera bien comprise à la lecture de la description suivante d'exemples de réalisation, en référence aux dessins annexés dans lesquels :
la figure 1 représente une vue en perspective du plateau porte-charge en position de recul maximal sur la surface de réception en élévation d'un véhicule ;
la figure 2 représente une vue en perspective du plateau porte-charge représenté à la figure 1 sous un autre angle ;
la figure 3 représente une vue de dessous en perspective du plateau porte-charge objet de l'invention et représenté à la figure 1 ;
la figure 4 représente une vue de détail de la coopération entre organes de limitation de déplacement du plateau et du véhicule et
les figures 5A à 5F représentent des vues schématiques en coupe des étapes d'entrée et de sortie du plateau du véhicule.

Le plateau porte-charge, objet de l'invention est représenté aux figures sous la référence générale 1. Ce plateau porte-charge est constitué, de manière en soi connue, d'un plateau proprement dit, formé d'une surface plane et d'un certain nombre de traverses et de longerons représentés en 1C aux figures pour la rigidification de ladite surface plane.

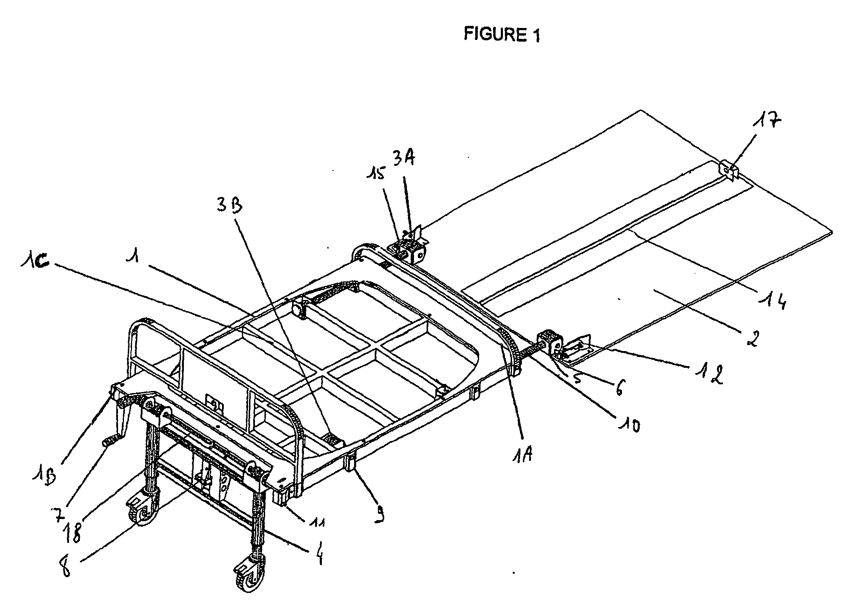

Ce plateau est encore équipé d'organes de roulement ou de frottement représenté en 3A et en 3B aux figures. Dans les exemples représentés, ces organes de roulement, constitués par des roues non directionnelles, servent au déplacement du plateau 1 sur une surface 2 de réception en élévation constituée par exemple par la plate-forme d'un véhicule de transport de charge du type de celle représentée à la figure 1.

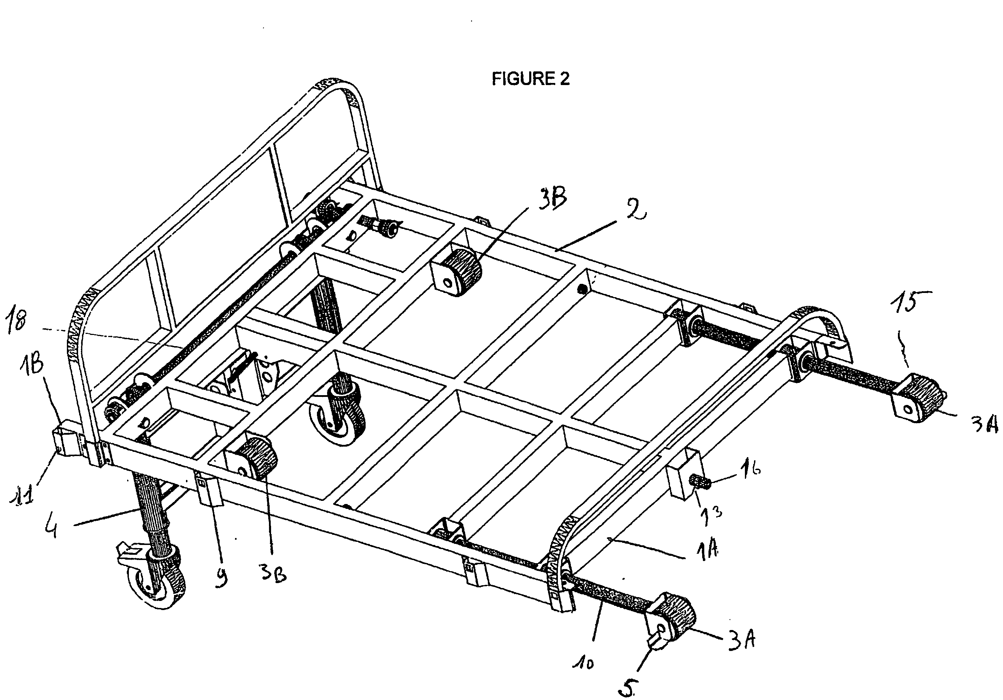

Ce plateau 1 porte-charge est encore équipé d'un jeu de pieds porte-roue, dits arrière, réglables en hauteur représentés en 4 aux figures. Ce jeu de pieds porte-roues dits arrière peut être unique comme l'illustrent les figures. En d'autres termes, le chariot peut ne pas posséder de pieds avant comme cela est le cas dans le brevet EP-0.439.812. Ces pieds, dits arrière, sont reliés au plateau, en l'occurrence par une liaison à pivotement, pour occuper une position effacée et une position d'appui au sol verrouillée, comme cela sera décrit plus en détail ci-après. Par convention, on appellera désormais le bord avant du plateau le bord destiné à être introduit le premier sur la surface 2 de réception en élévation du véhicule lors du déplacement du plateau 1 dans le sens d'une introduction de ce plateau à l'intérieur du véhicule. A l'inverse, le bord arrière du plateau 1 est le bord du plateau qui est extrait le premier du véhicule lors du passage du plateau 1 d'une position de transport à une position de chargement ou de déchargement de sa surface. En conséquence, eu égard à cette convention, le bord frontal avant du plateau est représenté en 1A aux figures tandis que le bord frontal arrière du plateau est représenté en 1B aux figures. Par ailleurs, par pieds réglables en hauteur, on entend des pieds permettant un positionnement à une hauteur réglable du plateau 1 porte-charge. Comme le montrent les figures 1 et 2, les pieds arrière 4 sont réglables en hauteur par l'intermédiaire de vérins mécaniques 18. Ces vérins mécaniques 18 peuvent être constitués par des renvois d'angle couplés à un jeu de pignons, lui-même couplé à un système écrou/vis sans fin incorporé dans chaque pied 4. Chaque pied 4 est quant à lui constitué de deux tubes télescopiques animés d'un mouvement relatif axial lors de l'actionnement du vérin mécanique en prise avec l'un desdits tubes. Chaque vérin mécanique peut être actionné au moyen d'une manivelle 7 ou d'un dispositif électrique, tel qu'un moteur, pour l'entraînement en rotation dudit vérin. Le dispositif de réglage en hauteur équipant un pied arrière est couplé mécaniquement à l'autre pied arrière de manière à rendre les pieds arrière cinématiquement solidaires en déplacement, c'est-à-dire entraînables par exemple dans le sens d'une augmentation ou d'une réduction de leur longueur de manière simultanée. La conception de ce dispositif de réglage en hauteur des pieds permet en outre, en position déployée des pieds, un réglage en hauteur du plateau 1 porte-charge à l'état chargé ou non chargé de ce dernier. Enfin, un tel dispositif permet de garantir de manière sûre que les pieds sont en position déployée verrouillée car seul le réglage en hauteur des pieds permettra la sortie du plateau 1 porte-charge lorsque des butées disposées respectivement sous le plateau et sur la surface de réception du véhicule empêchant une telle sortie.

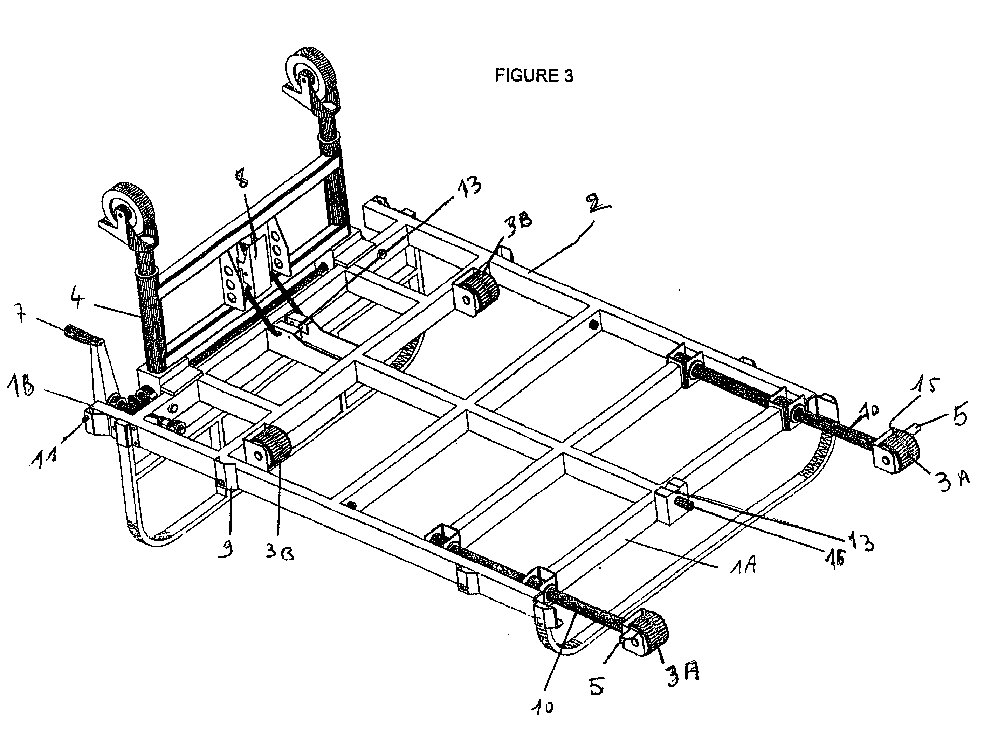

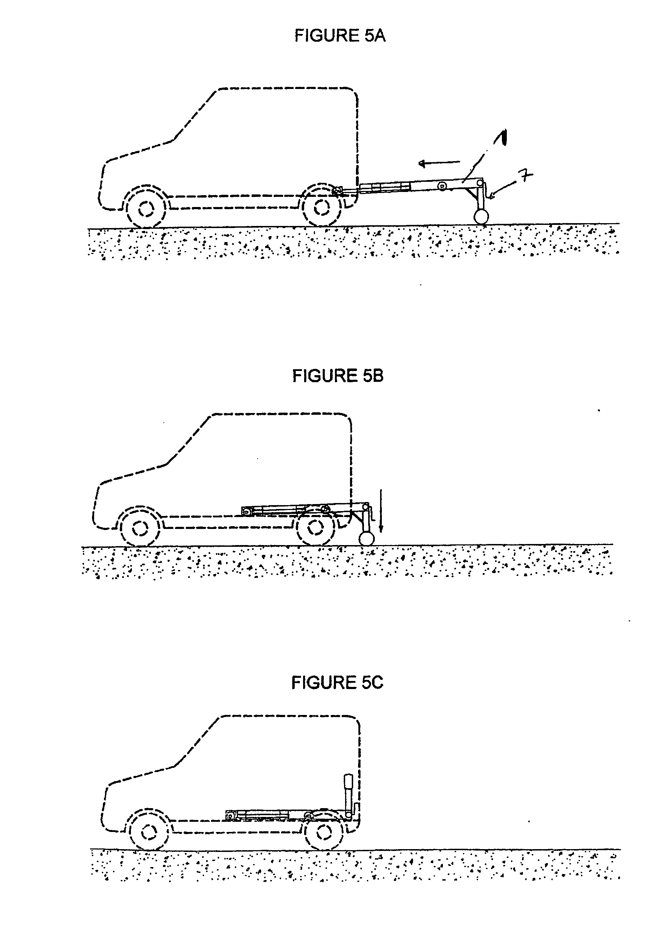

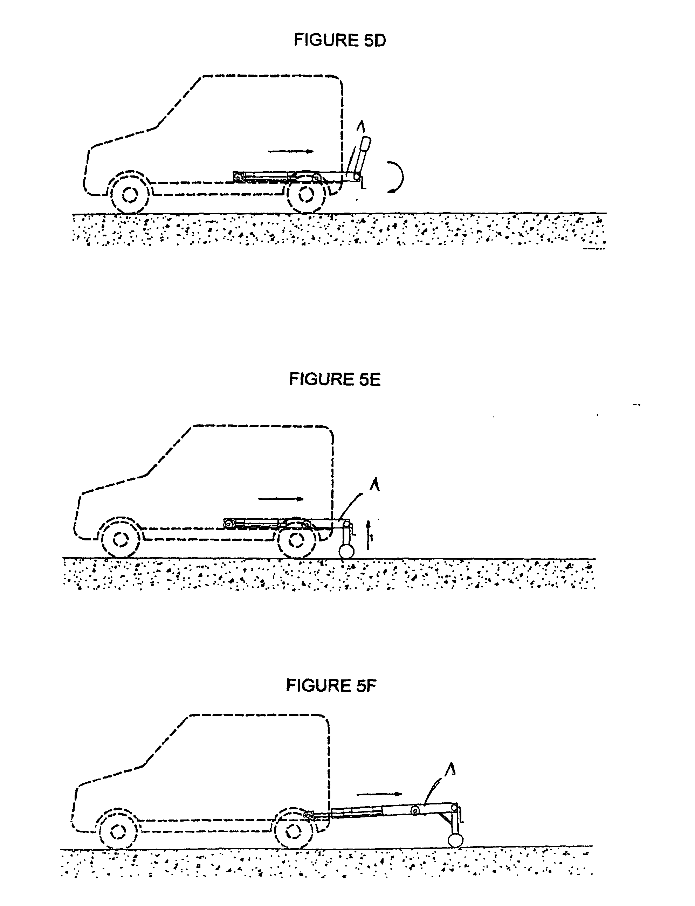

Du fait du déplacement du plateau 1 porte-charge suivant un mouvement sensiblement rectiligne sur la surface de réception 2 en élévation, il n'est pas nécessaire que les roues équipant les pieds arrière soient des roues directionnelles. Ces pieds arrière 4, reliés à pivotement au plateau porte-charge, sont effaçables par relèvement avec déverrouillage manuel ou par l'intermédiaire d'un organe de commande du dispositif de blocage 8 de la position d'appui au sol des pieds. Cette position effacée des pieds arrière est notamment représentée à la figure 5C. Le dispositif de blocage 8 des pieds arrière 4 en position d'appui au sol, dont un exemple de réalisation et représenté à la figure 3, ne sera pas décrit en détail ci-après car il peut être quelconque. Dans l'exemple représenté, ce dispositif de blocage des pieds arrière est constitué d'un crochet déverrouillable solidarisant au bâti des pieds porte-roue arrière 4 une jambe de force couplée à son autre extrémité au plateau porte-charge. Dans le cas où le déverrouillage du dispositif de blocage 8 de la position d'appui au sol des pieds s'effectue par un organe de commande (non représenté), cet organe de commande peut être actionné par appui du plateau 1 porte-charge sur la surface 2 de réception du véhicule. Cet organe de commande peut être constitué par un organe de déplacement, tel qu'une roue, mobile dans une chape montée à pivotement sous le plateau 2 porte-charge, cette chape étant reliée par l'intermédiaire d'un organe de liaison, tel qu'une bielle, au dispositif de blocage des pieds de sorte que le déplacement à pivotement de la chape provoque une libération ou un déverrouillage de l'organe d'actionnement du dispositif de blocage des pieds qui peut alors être librement actionné par l'utilisateur.

Comme cela a d'ores et déjà été mentionné, pour permettre le déplacement du plateau porte-charge à la surface de réception 2 en élévation d'un véhicule, le plateau porte-charge est équipé d'organes de roulement ou de glissement 3A, 3B, dits respectivement avant et arrière. Ce plateau 1 comporte au moins une partie de ces organes de roulement ou de glissement avant 3A disposés en saillie dite axiale au-delà du bord frontal avant 1A du plateau porte-charge.

Ce plateau 1 comporte encore au moins un organe 5 de limitation du déplacement du chariot disposé entre les organes de roulement ou de glissement avant 3A saillants et le bord frontal avant 1A du plateau 1, cet organe 5 de limitation du déplacement coopérant avec un organe 6 correspondant disposé sur la surface de réception du véhicule pour empêcher le recul des organes de roulement ou de glissement avant 3A au-delà d'une position prédéterminée d'appui sur la surface 2 de réception du véhicule.

De préférence, ces organes de roulement 3A ou de glissement avant sont reliés au plateau 1 par une liaison permettant un déplacement relatif entre plateau 1 et organe de roulement avant 3A y compris en position de recul maximal des organes de roulement avant 3A. Ainsi, dans les exemples représentés aux figures 1 et 2, cette liaison, autorisant un déplacement relatif entre plateau 1 et organe de roulement 3A, est constituée par des bras télescopiques 10. En effet, dans ce cas, les organes de roulement ou de glissement dits avant saillants 3A et les organes de limitation du déplacement 5 portés par le plateau 1 sont disposés à ou au voisinage de l'extrémité de bras télescopiques 10 s'étendant sensiblement horizontalement et perpendiculairement au bord frontal avant 1A du plateau 1. Ces bras télescopiques 10 de liaison entre plateau 1 et organes de roulement 3A permettent, en position d'extension des bras 10, un recul du plateau 1 en deçà de la surface 2 de réception en élévation du véhicule et en position rétractée des bras 10 un encombrement minimal du plateau sur la surface de réception du véhicule. La position d'extension est représentée à la figure 1. La position rétractée des bras est représentée à la figure 5C.

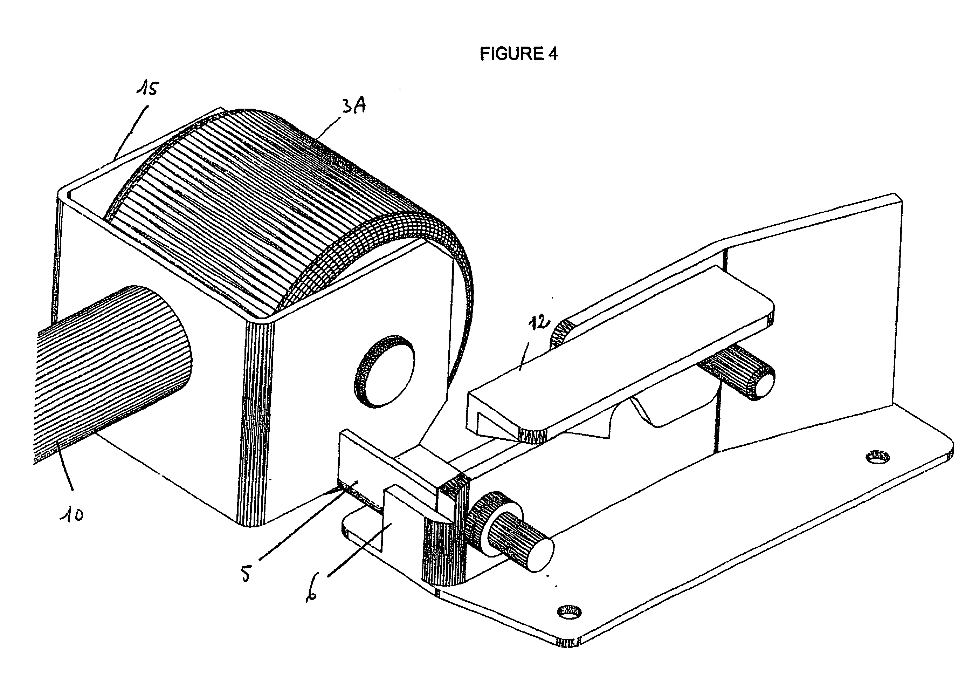

Comme le montre la figure 4, les organes 5 de limitation du déplacement du plateau sont des organes de butée, ici des butées latérales, positionnés sur le palier 15 de l'organe de roulement ou de glissement dit avant 3A équipant ledit plateau 1, ces organes de butée 5 coopérant avec des organes de butée 6 disposés sur la surface 2 de réception du véhicule du côté du bord de ladite surface 2 servant à l'introduction du plateau 1 porte-charge dans le véhicule. La simple venue en butée de l'organe de butée 5 contre l'organe de butée 6 génère, au cours de la poursuite du recul du plateau 1, l'extension des bras télescopiques 10 de manière à permettre un accès total à la surface 2 de chargement ou de déchargement du plateau 1 porte-charge. Pour faciliter le déplacement du plateau 1 porte charge sur la surface 2 de réception du véhicule et obtenir un déplacement sensiblement rectiligne de ce plateau parallèlement à son axe longitudinal, le plateau 1 porte-charge et la surface de réception en élévation sont équipés respectivement de moyens de guidage pour permettre, sur la surface de réception du véhicule, un déplacement sensiblement rectiligne de ce plateau parallèlement à son axe longitudinal. Le plateau porte-charge est donc équipé de moyens de guidage qui coopèrent avec des moyens de guidage de la surface 2 de réception du véhicule. Dans l'exemple représenté, ces moyens de guidage du plateau porte-charge sont constitués d'au moins un chemin de guidage, représenté en 13 à la figure, ce chemin de guidage 13, continu ou discontinu, coopérant avec un chemin de guidage 14 complémentaire ménagé sur la surface 2 de réception en élévation du véhicule, ces dits chemins de guidage 13, 14 étant maintenus, du seul fait du poids du plateau 1, en contact d'appui glissant lors du déplacement dudit plateau entre la position de déchargement ou de chargement et la position de transport.

On note que la conception des moyens de guidage est grandement simplifiée par rapport aux dispositifs classiques à glissière. En effet, le chemin de guidage 14 ménagé sur le plateau est constitué par une simple tôle comportant un pli sensiblement en V formant une nervure, cette nervure coopérant avec une rainure 13 discontinue ménagée sous la surface dudit plateau. Du fait de la présence des pieds arrière 4 sur ledit plateau, il n'est pas nécessaire que les moyens de guidage viennent en prise autrement que par simple contact glissant car l'appui stable du plateau 1 sur ses pieds arrière, lors du chargement ou du déchargement du plateau, empêche tout risque de basculement du plateau par absence de l'exercice d'un couple de basculement exercé sur la liaison entre plateau et surface 2 de réception en élévation. Cette stabilité est due essentiellement au fait que les pieds sont en position déployée réglables en hauteur à l'état chargé ou non du plateau par un vérin mécanique.

Pour renforcer la sécurité d'un tel plateau porte-charge, ce plateau peut être muni d'un organe de butée 9 disposé proche du bord arrière 1B du plateau. Cet organe de butée 9 est en réalité disposé entre le bord frontal avant 1A du plateau et les pieds arrière 4. Cet organe de butée 9 coopère avec la butée 6 disposée sur la surface 2 de réception du véhicule pour empêcher le recul intempestif du plateau 1 porte-charge en position effacée des pieds arrière 4. La butée 6 de la surface de réception du véhicule coopérant avec la butée 9 du plateau proche du bord arrière de ce dernier peut être la même que celle qui coopère avec la butée 5 équipant les organes de roulement avant 3A du plateau. L'action de cette butée 9 est éliminée par extension des pieds arrière 4 réglables en hauteur par l'intermédiaire des vérins mécaniques 18 pour permettre le dépassement par la butée 9 de la butée 6 positionnée sur la surface 2 de réception en élévation du véhicule. On garantit ainsi que la sortie du plateau 1 du véhicule ne peut s'effectuer que lorsque les pieds arrière 4 sont parfaitement verrouillés en position d'appui au sol du fait qu'ils sont capables d'assurer un relevage du plateau 1. Le réglage en hauteur de la paire de pieds arrière permet donc la venue en prise ou respectivement le dégagement des butées 6 et 9 entre elles. Il est à noter que l'organe de commande agissant sur le dispositif de blocage des pieds en position déployée décrit ci-dessus sera généralement positionné sous le plateau porte-charge entre le bord avant ou frontal du plateau et la butée 9.

Toujours pour des raisons de sécurité, le plateau 1 porte-charge est encore équipé, au voisinage de son bord arrière 1B, d'un organe 11 coopérant, lors de l'introduction du plateau 1 porte-charge dans le véhicule, avec un organe de verrouillage 12 solidaire de la surface 2 de réception en élévation du véhicule pour éviter un recul du plateau en position de transport. Dans les exemples représentés, cet organe 11 du plateau est constitué par un plot en saillie d'un bord latéral du plateau, l'organe de verrouillage 12 de la surface 2 de réception en élévation étant constituée par un simple crochet à pan incliné de manière à permettre un relevage automatique du crochet par le plot 11 au cours du déplacement du plateau 1 et un verrouillage autour dudit plot 11 lors de l'introduction du plateau 1 dans le véhicule. Enfin, le plateau 1 peut encore être équipé d'un organe de verrouillage 16 axial constitué par un simple plot disposé en saillie axiale du bord frontal avant 1A du plateau, ce plot 16 coopérant avec un orifice 17 ménagé au voisinage du bord de la surface 2 de réception en élévation opposé au bord servant à l'introduction du plateau dans le véhicule comme le montre la figure 1. Cette coopération des organes 16, 17 empêche tout déplacement latéral du plateau au cours de son transport.

En pratique, le fonctionnement d'un tel plateau porte-charge est le suivant. Comme l'illustrent les figures 5A à 5F, le plateau porte-charge 1 est tout d'abord positionné à l'intérieur du véhicule. Il suffit pour ce faire d'introduire les organes de roulement avant 3A à l'intérieur du véhicule au-delà de la butée ou de l'organe de limitation de déplacement 6 équipant la surface 2 de réception du véhicule. Le plateau est alors déplacé dans le sens d'une introduction du plateau dans le véhicule. Une fois ce plateau introduit conformément à la figure 5B, les pieds arrière 4 du plateau sont réglés en hauteur jusqu'à ce que les roues des pieds arrière ne touchent plus le sol. Les pieds arrière, alors déverrouillés manuellement ou par l'intermédiaire d'un organe de commande, sont relevés pour pouvoir être rentrés entièrement dans le véhicule. On poursuit le déplacement du plateau dans le sens d'une introduction dans le véhicule jusqu'à entrée totale du plateau dans le véhicule comme le montre la figure 5C. Dans cette position, les bras télescopiques 10 sont en position rétractée de telle sorte que les organes de roulement avant 3A du plateau sont positionnés sous le plateau. L'encombrement du plateau est donc réduit et identique à un plateau classique.

Pour la sortie du plateau du véhicule, on procède de manière inverse, comme le montrent les figures 5D à 5F. Les pieds arrière 4 du plateau sont d'abord positionnés en position d'appui au sol puis réglés en longueur pour permettre le passage de la butée 9 de sécurité au-dessus de la butée 6 jusqu'à une position où les butées équipant les organes de roulement avant du plateau viennent en butée avec les organes 6 de limitation du déplacement équipant la surface du véhicule. Dans cette position, le plateau peut alors être déplacé dans le sens d'un recul grâce à l'extension des bras 10 télescopiques. On obtient ainsi un plateau, comme le montre la figure 5F, dont la totalité de la surface de chargement ou de déchargement est aisément accessible à l'opérateur car située à l'extérieur du véhicule, bien que ce plateau reste en appui sur la plate-forme du véhicule par l'intermédiaire de ses organes de roulement avant 3A.

## Revendications

1. Plateau (1) porte-charge embarquable avec sa charge sur une surface (2) de réception en élévation d'un véhicule de transport, tel qu'un véhicule utilitaire, ce plateau porte-charge étant équipé d'organes de roulement ou de glissement (3A, 3B) servant au déplacement du plateau (1) sur la surface (2) de réception en élévation entre une position dite de transport dans laquelle le plateau (1) repose entièrement sur ladite surface (2) de réception du véhicule et une position dite de chargement ou de déchargement des charges du plateau dans laquelle le plateau (1) est au moins partiellement sorti du véhicule le plateau étant équipé d'un jeu, de préférence unique, de pieds (4) porte-roue arrière, réglables en hauteur, et reliés au plateau pour occuper une position effacée et une position d'appui au sol verrouillée, comporte au moins une partie de ses organes de roulement (3A) ou de glissement disposés en saillie au-delà du bord frontal avant (1A) du plateau porte-charge (1), **caractérisé en ce que** le plateau comporte au moins un organe (5) de limitation du déplacement du chariot disposé entre les organes de roulement (3A) ou de glissement saillants et le bord frontal avant (1A) du plateau (1), cet organe (5) de limitation du déplacement étant agencé pour coopérer avec un organe (6) correspondant disposé sur la surface de réception du véhicule pour empêcher le recul des organes de roulement (3A) ou de glissement avant au-delà d'une position prédéterminée d'appui sur la surface (2) de réception du véhicule.

2. Plateau porte-charge selon la revendication 1,
**caractérisé en ce que** les organes de roulement (3A) ou de glissement avant sont reliés au plateau (1) par une liaison permettant un déplacement relatif entre plateau (1) et organe de roulement avant (3A), y compris en position de recul maximal des organes de roulement avant (3A).

3. Plateau porte-charge selon l'une des revendications 1 et 2,
**caractérisé en ce que** les organes de roulement ou de glissement dits avant saillants (3A) et les organes de limitation du déplacement (5) portés par le plateau (1) sont disposés à ou au voisinage de l'extrémité de bras télescopiques (10) s'étendant sensiblement perpendiculairement au bord frontal avant (1A) du plateau (1), ces bras télescopiques (10) de liaison entre plateau (1) et organes de roulement (3A) permettant, en position d'extension des bras (10), un recul du plateau (1) en deçà de la surface (2) de réception en élévation du véhicule et, en position rétractée des bras (10), un encombrement minimal du plateau sur la surface (2) de réception du véhicule.

4. Plateau porte-charge selon l'une des revendications 1 à 3,
**caractérisé en ce que** les organes (5) de limitation du déplacement du plateau sont des organes de butée positionnés sur le palier (15) de l'organe de roulement ou de glissement dit avant (3A) équipant ledit plateau (1), ces organes de butée (5) coopérant avec des organes de butée (6) disposés sur la surface (2) de réception du véhicule du côté du bord de ladite surface (2) servant à l'introduction du plateau (1) porte-charge dans le véhicule.

5. Plateau porte-charge selon l'une des revendications 1 à 4,
**caractérisé en ce que** le plateau (1) porte-charge est équipé au voisinage de son bord arrière (1B) d'un organe (11) coopérant, lors de l'introduction du plateau (1) porte-charge dans le véhicule, avec un organe de verrouillage (12) solidaire de la surface (2) de réception en élévation du véhicule (1) pour éviter un recul du plateau (1) en position de transport.

6. Plateau porte-charge selon l'une des revendications 1 à 5,
**caractérisé en ce que** le plateau (1) porte-charge et la surface (2) de réception en élévation sont équipés respectivement de moyens de guidage pour permettre, sur la surface (2) de réception du véhicule, un déplacement sensiblement rectiligne du plateau (1) parallèlement à son axe longitudinal.

7. Plateau porte-charge selon la revendication 6,
**caractérisé en ce que** les moyens de guidage du plateau porte-charge sont constitués d'au moins un chemin de guidage (13), ce chemin de guidage (13), continu ou discontinu, coopérant avec un chemin de guidage (14) complémentaire ménagé sur la surface (2) de réception en élévation du véhicule, ces dits chemins de guidage (13, 14) étant maintenus, du seul fait du poids du plateau (1), en contact d'appui glissant lors du déplacement dudit plateau (1) entre la position de déchargement ou de chargement et la position de transport.

8. Plateau porte-charge selon l'une des revendications 1 à 7,
**caractérisé en ce que** le plateau (1) porte-charge est muni d'un organe de butée (9) proche du bord arrière (1B) du plateau, cette butée coopérant avec un organe de butée (6) disposé sur la surface (2) de réception du véhicule pour empêcher le recul intempestif du plateau (1) porte-charge en position effacée des pieds arrière (4), l'action de cette butée (9) étant éliminée par extension des pieds arrière (4) réglables en hauteur pour permettre le dépassement de la butée (6) positionnée sur la surface (2) de réception en élévation du véhicule.

9. Plateau porte-charge selon l'une des revendications 1 à 8,
**caractérisé en ce que** les pieds arrière (4) reliés à pivotement au plateau (1) porte-charge sont effaçables par relèvement avec déverrouillage manuel ou par l'intermédiaire d'un organe de commande actionné par appui du plateau (1) porte-charge chargé sur la surface (2) de réception du véhicule du dispositif de blocage (8) de la position d'appui au sol.

10. Plateau porte-charge selon l'une des revendications 1 à 9,
**caractérisé en ce que** les pieds arrière (4), de préférence cinématiquement solidaires, sont réglables en hauteur à l'état chargé ou non chargé du plateau par l'intermédiaire de vérins mécaniques (18), chaque pied arrière (4) étant constitué de deux tubes télescopiques animés d'un mouvement relatif axial lors de l'actionnement du vérin mécanique (18) en prise avec l'un desdits tubes.

11. Véhicule de transport de charge du type comportant une surface (2) de réception de charge en élévation,
**caractérisé en ce que** la surface de réception de charge en élévation est agencée pour embarquer un plateau (1) porte-charge conforme à l'une des revendications 1 à 10.

## Patentansprüche

1. Lastentragplatte (1), welche mitsamt ihrer Beladung auf einer Aufnahmehubfläche (2) eines Transportfahrzeugs wie z.B. eines Nutzfahrzeugs verstaut werden kann, wobei diese Lastentragplatte mit Roll- oder Gleitelementen (3A, 3B) ausgerüstet ist, die zum Verstellen der Tragplatte (1) auf der Aufnahmehubfläche (2) zwischen einer so genannten Transportposition, in welcher die Tragplatte (1) vollständig auf der genannten Aufnahmefläche (2) des Fahrzeugs ruht, und einer so genannten Lade- bzw. Entladeposition zum Laden bzw. Entladen von Lasten von der Tragplatte dient, in welcher die Tragplatte (1) zumindest teilweise aus dem Fahrzeug herausgezogen ist, wobei die Tragplatte mit einem vorzugsweise einzelnen Satz von rollenbestückten hinteren Beinen (4) ausgestattet ist, die in ihrer Höhe verstellbar und so mit der Tragplatte verbunden sind, dass sie eine zurückgezogene Position und eine verriegelte Auflageposition am Boden einnehmen können, wobei wenigstens ein Teil der Roll- oder Gleitelemente (3A) der Tragplatte über die Vorderkante (1A) der Lastentragplatte (1) hinausragend angeordnet ist,
**dadurch gekennzeichnet, dass** die Tragplatte mindestens ein Element (5) zum Begrenzen der Verstellweges des Wagens aufweist, das zwischen den vorspringenden Roll- oder Gleitelementen (3A) und der Vorderkante (1A) der Tragplatte (1) angeordnet ist, wobei dieses Element (5) zum Begrenzen der Verstellweges so angeordnet ist, dass es zusammen mit einem entsprechenden, auf der Aufnahmefläche des Fahrzeugs angeordneten Element (6) das Zurückfahren der vorspringenden Roll- oder Gleitelemente (3A) über eine zuvor auf der Aufnahmefläche des Fahrzeugs festgelegte Auflageposition hinaus verhindert.

2. Lastentragplatte gemäß Anspruch 1,
**dadurch gekennzeichnet, dass** die vorderen Roll- oder Gleitelemente (3A) mit der Tragplatte (1) über eine Verbindung gekoppelt sind, die eine relative Verstellung zwischen Tragplatte (1) und vorderem Rollelement (3A) auch in der maximalen Rückfahrposition der vorderen Rollelemente (3A) gestattet.

3. Lastentragplatte gemäß einem der Ansprüche 1 und 2,
**dadurch gekennzeichnet, dass** die genannten vorderen vorspringenden Roll- oder Gleitelemente (3A) und die auf der Tragplatte (1) montierten Elemente zur Begrenzung des Verstellweges (5) auf oder in der Nähe der Enden von Teleskoparmen (10) angeordnet sind, die etwa rechtwinklig zur Vorderkante (1A) der Tragplatte (1) stehen, wobei diese Verbindungs-Teleskoparme (10) zwischen der Tragplatte (1) und den vorderen Rollelementen (3A) in der ausgefahrenen Position der Arme (10) ein Zurückfahren der Tragplatte (1) diesseits der Aufnahmehubfläche (2) des Fahrzeugs ermöglichen und in eingefahrener Position der Arme (10) einen minimalen Platzbedarf der Tragplatte auf der Aufnahmefläche (2) des Fahrzeugs gewährleisten.

4. Lastentragplatte gemäß einem der Ansprüche 1 bis 3,
**dadurch gekennzeichnet, dass** die Elemente (5) zur Begrenzung des Tragplatten-Verstellweges Anschlagselemente sind, die auf dem Lager (15) des genannten vorderen Roll- oder Gleitelements (3A) positioniert sind, mit welchem die genannte Tragplatte (1) ausgerüstet ist, wobei diese Anschlagselemente (5) mit Anschlagselementen (6) zusammenwirken, die auf der Aufnahmehubfläche (2) des Fahrzeugs auf der Seite mit dem Rand der genannten Fläche (2) angeordnet sind und zum Einschieben der Lastentragplatte (1) in das Fahrzeug dienen.

5. Lastentragplatte gemäß einem der Ansprüche 1 bis 4,
**dadurch gekennzeichnet, dass** die Lastentragplatte (1) in der Nähe ihrer Hinterkante (1B) mit einem Element (11) ausgerüstet ist, welches beim Einschieben der Lastentragplatte (1) in das Fahrzeug mit einem kraftschlüssig auf der Aufnahmehubfläche (2) des Fahrzeugs montierten Verriegelungselement (12) so zusammenwirkt, dass ein Zurückfahren der Tragplatte (1) in Transportposition vermieden wird.

6. Lastentragplatte gemäß einem der Ansprüche 1 bis 5,
**dadurch gekennzeichnet, dass** die Lastentragplatte (1) und die Aufnahmehubfläche (2) des Fahrzeugs jeweils mit Führungsvorrichtungen ausgestattet sind, welche eine etwa geradlinige Verstellbewegung der Tragplatte (1) parallel zu deren Längsachse auf der Aufnahmefläche (2) des Fahrzeugs ermöglichen.

7. Lastentragplatte gemäß Anspruch 6,
**dadurch gekennzeichnet, dass** die Führungsvorrichtungen der Lastentragplatte aus mindestens einer Führungsbahn (13) bestehen, wobei diese kontinuierliche oder diskontinuierliche Führungsbahn (13) mit einer zusätzlich auf der Aufnahmehubfläche (2) des Fahrzeugs angeordneten Führungsbahn (14) zusammenwirkt und diese genannten Führungsbahnen (13, 14) beim Verfahren der genannten Tragplatte (1) zwischen der Entlade- bzw. Ladeposition und der Transportposition lediglich durch das Gewicht der Tragplatte (1) unter gleitendem Auflagekontakt gehalten werden.

8. Lastentragplatte gemäß einem der Ansprüche 1 bis 7,
**dadurch gekennzeichnet, dass** die Lastentragplatte (1) nahe der Hinterkante (1B) der Tragplatte mit einem Anschlagselement (9) versehen ist, welches mit einem auf der Aufnahmefläche (2) des Fahrzeugs angeordneten Anschlagselement (6) so zusammenwirkt, dass ein ungewolltes Zurückfahren der Lastentragplatte (1) bei zurückgezogener Position der hinteren Beine (4) vermieden wird, wobei die Wirkung dieses Anschlags (9) durch Ausfahren der in ihrer Höhe verstellbaren hinteren Beine (4) aufgehoben wird, so dass ein Überfahren des auf der Aufnahmehubfläche (2) des Fahrzeugs angeordneten Anschlags (6) möglich ist.

9. Lastentragplatte gemäß einem der Ansprüche 1 bis 8,
**dadurch gekennzeichnet, dass** die schwenkbar mit der Lastentragplatte (1) verbundenen hinteren Beine (4) durch Anheben unter manueller Entriegelung oder über ein Steuerorgan, das bei Aufliegen der belasteten Lastentragplatte (1) auf der Aufnahmefläche (2) des Fahrzeugs auf der Blockiervorrichtung (8) in der Auflageposition auf dem Boden betätigt wird, zurückgezogen werden können.

10. Lastentragplatte gemäß einem der Ansprüche 1 bis 9,
**dadurch gekennzeichnet, dass** die vorzugsweise kinematisch kraftschlüssigen hinteren Beine (4) je nach belastetem oder unbelastetem Zustand der Tragplatte mit Hilfe von mechanischen Hubspindeln (18) in ihrer Höhe verstellbar sind, wobei jedes hintere Bein (4) aus zwei Teleskoprohren besteht, die bei Betätigung der mit einem der genannten Rohren verbundenen mechanischen Hubspindel (18) eine relative Axialbewegung ausführen.

11. Lasttransportfahrzeug der Bauart, die eine Lastaufnahmehubfläche (2) umfasst,
**dadurch gekennzeichnet, dass** die Lastaufnahmehubfläche zum Verladen einer Lastentragplatte (1) gemäß einem der Ansprüche 1 bis 10 ausgelegt ist.

## Claims

1. Loading bed (1) that can be put with its load onto a raised receiving surface (2) of a transport vehicle, such as a commercial vehicle, this loading bed being equipped with rolling or sliding members (3A, 3B) which serve to move the bed (1) on the raised receiving surface (2) between a position termed the transport position, in which the bed (1) bears completely on the said receiving surface (2) of the vehicle, and a position termed the position for loading or unloading loads onto or from the bed, in which the bed (1) has at least partially emerged from the vehicle,
the bed, being equipped with a set, preferably a single set, of rear wheel-bearing legs (4) which are adjustable in height and connected to the bed to take up a raised position and a locked position bearing on the ground, has at least some of its rolling (3A) or sliding members arranged protruding beyond the forward front edge (1A) of the loading bed (1), **characterised in that** the bed has at least one member (5) for limiting the movement of the carriage arranged between the protruding rolling (3A) or sliding members and the forward front edge (1A) of the bed (1), this member (5) for limiting the movement being equipped to interact with a corresponding member (6) arranged on the receiving surface of the vehicle to prevent the backward movement of the front rolling (3A) or sliding members beyond a predetermined position bearing on the receiving surface (2) of the vehicle.

2. Loading bed according to Claim 1,
**characterised in that** the front rolling (3A) or sliding members are connected to the bed (1) by a link enabling relative movement between bed (1) and front rolling member (3A), including in the position of maximum backward movement of the front rolling members (3A).

3. Loading bed according to one of Claims 1 and 2,
**characterised in that** the rolling or sliding members termed the protruding front rolling or sliding members (3A) and the members for limiting the movement (5) borne by the bed (1) are arranged at or in the vicinity of the end of telescopic arms (10) extending essentially perpendicularly to the forward front edge (1A) of the bed (1), these linking telescopic arms (10) between bed (1) and rolling members (3A) enabling, when the arms (10) are in the extended position, a backward movement of the bed (1) on this side of the raised receiving surface (2) of the vehicle and, when the arms (10) are in the retracted position, a minimum space requirement for the bed on the receiving surface (2) of the vehicle.

4. Loading bed according to one of Claims 1 to 3,
**characterised in that** the elements (5) for limiting the movement of the bed are stop members positioned on the bearing (15) of the rolling or sliding member termed the front rolling or sliding member (3A) equipping the said bed (1), these stop members (5) interacting with stop members (6) arranged on the receiving surface (2) of the vehicle at the side of the edge of the said surface (2) which serves for introduction of the loading bed (1) into the vehicle.

5. Loading bed according to one of Claims 1 to 4,
**characterised in that** the loading bed (1) is equipped in the vicinity of its rear edge (1B) with a member (11) interacting, during introduction of the loading bed (1) into the vehicle, with a locking member (12) integral with the raised receiving surface (2) of the vehicle (1) (sic) to prevent backward movement of the bed (1) in the transport position.

6. Loading bed according to one of Claims 1 to 5,
**characterised in that** the loading bed (1) and the raised receiving surface (2) are respectively equipped with guide means to allow an essentially rectilinear movement of the bed (1) parallel to its longitudinal axis on the receiving surface (2) of the vehicle.

7. Loading bed according to Claim 6,
**characterised in that** the guide means of the loading bed consist of at least one guide track (13), this guide track (13) which may be continuous or discontinuous, interacting with a complimentary guide track (14) provided on the raised receiving surface (2) of the vehicle, these said guide tracks (13, 14) being held, merely by the weight of the bed (1), in sliding bearing contact during the movement of the said bed (1) between the unloading or loading position and the transport position.

8. Loading bed according to one of Claims 1 to 7,
**characterised in that** the loading bed (1) is equipped with a stop member (9) close to the rear edge (1B) of the bed, this stop interacting with a stop member (6) arranged on the receiving surface (2) of the vehicle to prevent inadvertent backward movement of the loading bed (1) into the position in which the rear legs (4) are retracted, the action of this stop (9) being negated by extension of the height-adjustable rear legs (4) to enable the stop (6) positioned on the raised receiving surface (2) of the vehicle to be cleared.

9. Loading bed according to one of Claims 1 to 8,
**characterised in that** the rear legs (4) linked to the loading bed (1) such that they can pivot can be retracted by lifting the locking device (8) from the position bearing on the ground with manual unlocking or via a control member actuated by the loaded loading bed (1) bearing on the receiving surface (2) of the vehicle.

10. Loading bed according to one of Claims 1 to 9,
**characterised in that** the height of the rear legs (4), which preferably are kinematically integrated, is controllable, when the bed is in the loaded or non-loaded state, by means of mechanical jacks (18), each rear leg (4) consisting of two telescopic tubes actuated by an axial relative movement during activation of the mechanical jack (18) engaging with one of the said tubes.

11. Load transport vehicle of the type comprising a raised load-receiving surface (2), **characterised in that** the raised load-receiving surface is equipped to take on board a loading bed (1) according to one of Claims 1 to 10.
